# EUROPÄISCHE PATENTSCHRIFT

(11) **EP 3 491 192 B1**
(45) Veröffentlichungstag und Bekanntmachung des Hinweises auf die Patenterteilung: **02.09.2020**
(21) Anmeldenummer: 17742161.7
(22) Anmeldetag: 18.07.2017
(51) Int. Cl.: E01C 19/28

(54) **BODENVERDICHTUNGSWALZE MIT SENSOREINRICHTUNG AN DER WALZBANDAGE UND VERFAHREN ZUR ERMITTLUNG DER BODENSTEIFIGKEIT**
SOIL-COMPACTING ROLLER HAVING A SENSOR DEVICE ON THE ROLLER LINING, AND METHOD FOR DETERMINING SOIL STIFFNESS
ROULEAU DE COMPACTAGE DU SOL COMPRENANT UN DISPOSITIF DE DÉTECTION SUR LA GARNITURE DU ROULEAU ET PROCÉDÉ DE DÉTERMINATION DE LA RIGIDITÉ DU SOL

(30) Priorität: 26.07.2016 DE 102016009085
(43) Veröffentlichungstag der Anmeldung: 05.06.2019
(73) Patentinhaber: BOMAG GmbH, 56154 Boppard (DE)
(72) Erfinder: LAUGWITZ, Niels, 56112 Lahnstein (DE); LAUX, Robert, 56566 Neuwied (DE)
(74) Vertreter: Heidler, Philipp
(86) Internationale Anmeldenummer: PCT/EP2017/000866
(87) Internationale Veröffentlichungsnummer: WO 2018/019407

(56) Entgegenhaltungen:
- CN-A- 102 691 248
- DE-A1-102011 088 567
- DE-U1-202015 003 158
- US-B2- 7 168 885
- US-B2- 9 039 319

## Beschreibung

Die Erfindung betrifft eine Bodenverdichtungswalze, insbesondere eine Tandemwalze oder einen Walzenzug. Die Erfindung betrifft ferner ein Verfahren zur Ermittlung der Bodensteifigkeit während der Bodenverdichtung mit einer Bodenverdichtungswalze, insbesondere einer Tandemwalze oder einem Walzenzug.

Gattungsgemäße Bodenverdichtungswalzen werden dazu eingesetzt, die Festigkeit eines Bodenuntergrundes und damit die Tragfähigkeit des Bodens, beispielsweise für Straßen oder Gebäude, zu erhöhen bzw. den Bodenuntergrund hin zu einer gewünschten Festigkeit zu verdichten. Dafür weisen die gattungsgemäßen, bevorzugt selbstfahrenden, Bodenverdichtungswalzen häufig einen Maschinenrahmen, ein Antriebsaggregat und wenigstens eine am Maschinenrahmen um eine Rotationsachse rotierbar gelagerte Walzbandage auf. Im Falle einer Tandemwalze weist die Bodenverdichtungswalze typischerweise zwei Walzbandagen auf, die jeweils beispielsweise über ein Schemelgelenk mit dem Maschinenrahmen verbunden oder an zwei über ein Knickgelenk miteinander verbundenen Maschinenrahmenhälften gelagert sind. Das Maschinengewicht der Tandemwalze wird auf beide Walzbandagen verteilt und zur Verdichtung des Bodens genutzt. Das Fahrwerk eines Walzenzuges weist dagegen typischerweise nur eine Walzbandage auf, die durch ein Radpaar ergänzt wird. Im Arbeitsbetrieb der Bodenverdichtungswalze bewegt sich diese typischerweise in eine Arbeitsrichtung über den zu verdichtenden Bodenuntergrund. Die Bodenverdichtungswalzen werden häufig alternierend sowohl vorwärts als auch rückwärts betrieben. Um die Verdichtung des Bodens durch die gattungsgemäßen Bodenverdichtungswalzen zu beeinflussen und insbesondere zu verstärken, ist es üblich, dass die Bodenverdichtungswalzen eine zumindest teilweise in der Walzbandage angeordnete Erregereinrichtung aufweisen. Diese Erregereinrichtung wird auch als Schwingungs- oder Vibrationserreger bezeichnet. Dieser umfasst typischerweise eine Unwucht, die von einem Erregermotor in Rotation versetzt wird und dadurch die Walzbandage mit Schwingungen bzw. Vibrationen beaufschlagt. Eine entsprechende Bodenverdichtungswalze ist beispielsweise aus der DE 10 2014 018 457 A1 bekannt.

Typischerweise wird im Arbeitsbetrieb der gattungsgemäßen Bodenverdichtungswalzen der Bodenuntergrund mehrfach überfahren, bis eine gewünschte Verdichtung erreicht wurde. Um den Zeitpunkt zu erkennen, an dem es sich nicht mehr lohnt, weitere Überfahrten mit der Bodenverdichtungswalze vorzunehmen, weil der Boden schon ausreichend verdichtet ist oder annähernd seine maximale Verdichtung erreicht hat, ist es bekannt, die Bodenverdichtungswalzen mit einer Sensoreinrichtung zur Messung eines mit der aktuellen Bodenverdichtung in Zusammenhang stehenden Parameters. Die Sensoreinrichtung umfasst dazu einen oder auch mehrere Beschleunigungssensoren, mit dem sich die sogenannte Bodensteifigkeit des zu verdichtenden Bodenmaterials als Maß dafür ermitteln lässt, wie sehr der Boden bereits verdichtet ist. Ein Verfahren zur Berechnung der Bodensteifigkeit ist beispielsweise aus der EP 2 627 826 B1 bekannt.

Die Sensoreinrichtungen des Standes der Technik sind typischerweise am Maschinenrahmen, beispielsweise an einem Bandagenlager, der Bodenverdichtungswalze angeordnet. Nachteilig an einer derartigen Anordnung ist, dass die Walzbandagen üblicherweise gegenüber dem Maschinenrahmen und insbesondere den Bandagenlagern am Maschinenrahmen schwingungsentkoppelt bzw. schwingungsgedämpft sind, beispielsweise durch geeignete Gummidämpfer etc. Zusätzlich zu einer gewollten Schwingungsentkopplung zwischen der Walzbandage und dem Maschinenrahmen wird die Schwingung der Walzbandage ebenfalls durch das Spiel des Fahrlagers, über das die Walzbandage mit dem Maschinenrahmen verbunden ist, gedämpft. Die Schwingungen der Walzbandage, aus der die Bodensteifigkeit berechnet werden kann, werden also nicht vollständig auf den Maschinenrahmen und damit die Sensoreinrichtung übertragen. Dies nimmt mit zunehmendem Alter der Bodenverdichtungswalze durch den Verschleiß des Fahrlagers und das dadurch resultierende sich vergrößernde Spiel noch zu. Im Ergebnis ist dadurch bei den Bodenverdichtungswalzen des Standes der Technik die Bestimmung der Bodensteifigkeit durch die Sensoreinrichtung vergleichsweise ungenau. Um diese Probleme zu umgehen wurde in der DE 10 2011 088 567 A1 bereits vorgeschlagen, am Bandagenmantel innen mehrere Sensoren gleichmäßig am Umfang zu verteilen, um so ein genaueres Bild über die tatsächliche Bewegung der Walzbandage zu erhalten. Durch die Vielzahl an notwendigen Sensoren und die Notwendigkeit die Signale in einer zentralen Auswerteeinheit zu verarbeiten ist ein solches System jedoch aufwendig zu realisieren. In der US 7,168,885 B2 ist ein Schwingungsamplitudensensor beschrieben, der innen an der Tellerscheibe der Walzenbandage, radial von der Rotationsachse beabstandet, angeordnet ist. Die US 9,039,319 B2 wiederum offenbart eine Straßenwalze mit jeweils einem Sensor auf den Rotationsachsen der Walzenbandagen.

Die Aufgabe der vorliegenden Erfindung ist es daher, bei reduziertem Herstellungsaufwand die Messgenauigkeit bei der Bestimmung der Bodensteifigkeit im Betrieb einer Bodenverdichtungswalze signifikant zu verbessern.

Die Lösung der Aufgabe gelingt mit einer Bodenverdichtungswalze und einem Verfahren gemäß den unabhängigen Ansprüchen. Bevorzugte Weiterbildungen sind in den abhängigen Ansprüchen angegeben.

Konkret gelingt die Lösung mit einer gattungsgemäßen Bodenverdichtungswalze dadurch, dass die Sensoreinrichtung im Bereich der Rotationsachse an der Walzbandage angeordnet ist und sich im Betrieb der Bodenverdichtungswalze mit der Walzbandage mitdreht. Die Sensoreinrichtung bewegt sich im Betrieb somit zusammen mit der Walzbandage, ist gegenüber der Walzbandage ortsfest und ändert ihre Lage relativ zum Maschinenrahmen. Die Sensoreinrichtung ist somit an einem sich mit der Walzbandage drehenden Teil der Walzbandage angeordnet. Die Walzbandage ist Teil des Fahrwerks der Bodenverdichtungswalze und dreht sich im Arbeitsbetrieb um ihre Rotationsachse. Sie ist über Fahrlager mit dem feststehenden und nicht rotierenden Maschinenrahmen verbunden, beispielsweise über Bandagenlager. Im Unterschied zu den bisherigen Anordnungen ist es erfindungsgemäß nun vorgesehen, dass die Sensoreinrichtung nicht an einem feststehenden Teil des Maschinenrahmens, wie beispielsweise dem Bandagenlager, angeordnet ist, sondern an der Walzbandage selbst. Insbesondere ist die Sensoreinrichtung derart unmittelbar an der Walzbandage angeordnet, dass sie gegenüber der Walzbandage gerade nicht schwingungsentkoppelt ist. Es befinden sich also weder Dämpfungselemente zwischen der Sensoreinrichtung und der Walzbandage noch beispielsweise Fahrlager oder Drehgelenke, die aufgrund ihres Spiels zu einer, wenn auch teilweisen, Entkopplung der Schwingungen der Walzbandage gegenüber der Sensoreinrichtung führen. Die Sensoreinrichtung ist somit ungedämpft mit der Walzbandage verbunden und mit dieser mitschwingend bzw. mitvibrierend ausgebildet. Aufgrund der Anordnung der Sensoreinrichtung unmittelbar an der Walzbandage in der beschriebenen Art und Weise kann die Sensoreinrichtung die Bodensteifigkeit mit sehr hoher Genauigkeit und ohne Verfälschung durch eine Dämpfung der Vibration bzw. der Schwingungen der Walzbandage bestimmen. Die Erfindung eignet sich für alle Bodenverdichtungsmaschinen mit Walzbandagen mit Vibrationseinrichtung, also beispielsweise auch handgeführten Bodenverdichtungswalzen. Erfindungsgemäß wird die Sensoreinrichtung im Bereich der Rotationsachse der Walzbandage angeordnet. Insbesondere ist es bevorzugt, wenn die Sensoreinrichtung direkt auf der Rotationsachse der Walzbandage angeordnet ist. Die Rotationsachse der Walzbandage schneidet in dieser Position die Sensoreinrichtung. Die Sensoreinrichtung kann allerdings auch geringfügig neben der Rotationsachse der Walzbandage angeordnet sein, wobei eine Anordnung möglichst nah an der Rotationsachse bevorzugt ist. "Im Bereich der Rotationsachse" bedeutet vorliegend insbesondere, dass die Sensoreinrichtung nicht weiter als ein Drittel des Radius von der Rotationsachse der Walzbandage entfernt ist, bevorzugt nicht weiter als ein Fünftel des Radius und ganz besonders bevorzugt nicht weiter als ein Zehntel des Radius. Der Radius bezeichnet insbesondere den Abstand der Rotationsachse der Walzbandage zur inneren Mantelfläche des hohlzylindrischen Bandagenmantels. Durch die zentrale Anordnung möglichst nahe an der Rotationsachse wird der Einfluss von Drehschwingungen der Bandage auf das Messsignal minimiert.

Vorliegend werden zur Ermittlung der Bodensteifigkeit Beschleunigungssensoren eingesetzt. Es ist alternativ aber beispielsweise auch möglich, einen Drehratensensor einzusetzen, mit dem anschließend über Integration der Bandagendrehwinkel ermittelt werden kann. Die Bodensteifigkeit kann dann durch Auswertung von Schwinggeschwindigkeitssensoren gemessen werden. Auch ein mechanisches Pendel kann zur Messung der Ausrichtung der Walzbandage beziehungsweise des Sensorsystems eingesetzt werden. Die beschriebenen erfindungsgemäßen Merkmale im Zusammenhang mit Beschleunigungssensoren können, soweit anwendbar, ebenfalls auf die genannten, nicht beanspruchten alternativen Systeme angewendet werden. Da die in den Sensoreinrichtungen meistens eingesetzten Beschleunigungssensoren eine Messachse aufweisen, können diese die Bodensteifigkeit nur messen, wenn ihre Messachse in einem gleichbleibenden Winkel zum Boden ausgerichtet ist. Daher wurden im Stand der Technik die Sensoreinrichtungen immer auf dem feststehenden Maschinenrahmen der Bodenverdichtungswalzen mit einer fixen Orientierung ihrer Messachse beispielsweise parallel zur Erdbeschleunigung oder unter einem bestimmten festgelegten Winkel relativ zum Maschinenrahmen angeordnet. Der Erfindung liegt die Erkenntnis zugrunde, dass eine Messung der Bodensteifigkeit auch punktuell in regelmäßigen Abständen erfolgen kann und diese punktuellen Messungen ausreichen, um für den praktischen Einsatz eine ausreichende Bestimmung der Bodensteifigkeit im Arbeitsprozess zu erreichen. So ist es mit der erfindungsgemäßen Sensoreinrichtung insbesondere möglich, wenigstens immer dann einen exakten Wert für die Bodensteifigkeit zu errechnen, wenn die Messachse der Sensoreinrichtung parallel zur Richtung der Erdbeschleunigung ausgerichtet ist, was beispielsweise daran erkannt werden kann, dass die ermittelte Schwingungsamplitude hier am höchsten ist. Die erfindungsgemäße Sensoreinrichtung ist daher bevorzugt mit ihrer Messachse senkrecht zur Rotationsachse der Walzbandage bzw. in Radialrichtung zur Rotationsachse ausgerichtet. In einer Ebene senkrecht zur Rotationsachse schneidet die Messachse der Sensoreinrichtung somit die Rotationsachse. Eine derart ausgerichtete Sensoreinrichtung erreicht nach jeder halben Umdrehung der Walzbandage eine Position, in der die Messachse parallel zur Richtung der Erdbeschleunigung ausgerichtet ist. In dieser Position kann dann punktuell ein besonders exakter Wert für die Bodensteifigkeit mit der erfindungsgemäßen Sensoreinrichtung bestimmt werden. Die einzelnen Messpunkte sind in Arbeitsrichtung der Bodenverdichtungswalze jeweils um den halben Umfang der Walzbandage voneinander entfernt.

Die vorliegende Erfindung ermöglicht zudem aber auch eine kontinuierliche Messung der Bodensteifigkeit. Dazu ist es vorgesehen, dass die Sensoreinrichtung wenigstens zwei, insbesondere genau zwei, Beschleunigungssensoren umfasst, die jeweils eine, insbesondere in der vorstehend beschriebenen Weise senkrecht zur Rotationsachse der Walzbandage ausgerichtete, Messachse aufweisen, wobei die Messachsen gemäß der Erfindung um einen Winkel, insbesondere um wenigstens 60° und ganz besonders um 90°, zueinander versetzt angeordnet sind. Durch die um einen Winkel zueinander versetzte Anordnung der Messachsen zweier Beschleunigungssensoren kann durch die rechnerische Kombination der beiden Messergebnisse die Richtung der Erdbeschleunigung ermittelt werden. Hierfür werden die Messergebnisse beispielsweise Tiefpass-gefiltert, um die Schwingbewegungen der Walzbandage aus den Ergebnissen zu entfernen. Um die Genauigkeit weiter zu steigern kann beispielsweise ein Kalman-Filter eingesetzt werden, da Änderungen der Bandagendrehzahl nicht beliebig schnell erfolgen können. Besonders exakt gelingen diese Berechnungen, wenn die Messachsen der zwei Beschleunigungssensoren jeweils, und insbesondere zusammen, in einer Ebene liegen, die senkrecht zur Rotationsachse der Walzbandage ausgerichtet ist. Innerhalb dieser Ebene sind die Messachsen der Beschleunigungssensoren dann um einen Winkel zueinander versetzt, der bevorzugt 90° beträgt. Bei einer derartigen Anordnung gestaltet sich die Berechnung besonders einfach und die Messung besonders präzise. Verlaufen die Messachsen in Richtung der Rotationsachse versetzt, so bestimmt sich der Versatz der Messachsen zueinander in einer virtuellen Ebene senkrecht zur Rotationsachse, in die die Messachse projiziert werden. Aus den Beschleunigungssignalen zweier Beschleunigungssensoren kann die Richtung der Erdbeschleunigung einfach und genau durch Vektoraddition bestimmt werden. Wie schon beschrieben kann mit verschiedenen Filtermethoden der störende Einfluss der Schwingbeschleunigungen hinreichend unterdrückt werden. Ist die Richtung der Erdbeschleunigung bekannt, kann eine frei wählbare Messrichtung definiert werden, die zur Berechnung der Bodensteifigkeit herangezogen wird. Somit können die gemessenen Beschleunigungen ausgehend vom rotierenden Bezugssystem der Bandage auf ein raumfestes (nicht drehendes) Bezugssystem umgerechnet werden. Die Bandagenbeschleunigung in Messrichtung ergibt sich aus dem Skalarprodukt des gewünschten Richtungsvektor und der beiden Beschleunigungsvektoren. Der Richtungsvektor ist bei einfachen Verdichtungsmesssystemen häufig vertikal orientiert. Für viele Anwendungen ist es jedoch sinnvoller einen von der Vertikalen abweichenden Richtungsvektor zu benutzen, da die maximale dynamische Bodenkontaktkraft in der Regel nicht senkrecht auf die Bandage einwirkt. Da der Winkel der Bodenkontaktkraft variiert, ist es vorteilhaft wenn der Richtungsvektor der Messrichtung je nach Erfordernis frei gewählt werden kann. Daher ist die erfindungsgemäße Sensoreinrichtung besonders kostengünstig, da nur eine Baugruppe an der Bandage verbaut werden muss, und trotzdem eine verbesserte Genauigkeit durch die frei wählbare Messrichtung und die Vermeidung unerwünschter Dämpfungseinflüsse erreicht wird.

Aus Präzisionsgründen ist es bevorzugt, wenn sich die Messachsen der Beschleunigungssensoren mit der Rotationsachse der Walzbandage schneiden. Ganz besonders bevorzugt ist eine Ausführungsform, in der die Messachsen der Beschleunigungssensoren die Rotationsachse der Walzbandage in einem rechten Winkel schneiden (in einer Ebene, in der die Rotationsachse verläuft) und insbesondere darüber hinaus um 90° zueinander versetzt sind (in einer Ebene oder Projektionsebene senkrecht zur Rotationsachse). Bei dieser Ausführungsform lässt sich die höchste Messgenauigkeit erreichen. Ist die Erregereinrichtung bzw. der Vibrationserreger oder Schwingungserreger der Walzbandage ein Einwellen-Rotationserreger, weist er also lediglich eine Erregerwelle auf, so ist es bevorzugt, wenn die Messachsen der Beschleunigungssensoren zusätzlich zur Rotationsachse der Walzbandage auch die Rotationsachse der Erregerwelle schneiden. Darüber hinaus ist es bevorzugt, dass die Messachsen der Beschleunigungssensoren ebenfalls gegenüber der Rotationsachse der Erregerwelle senkrecht angeordnet sind.

Typischerweise sind Walzbandagen als Hohlzylinder ausgebildet, deren Hohlraum im Bereich der Stirnseiten bzw. im Randbereich quer zur Arbeitsrichtung der Bodenverdichtungswalze von sogenannten Tellerscheiben verschlossen wird. An diesen Tellerscheiben sind typischerweise ebenfalls direkt oder indirekt die Fahrlager befestigt, über die die Walzbandage am Maschinenrahmen gelagert ist. Die Tellerscheiben und der Hohlzylinder sind üblicherweise über Schweißverbindungen miteinander verbunden. Die Tellerscheiben gehören also zur Walzbandage und drehen sich im Betrieb der Bodenverdichtungswalze um deren Rotationsachse. Insbesondere aus Platzgründen ist es nun bevorzugt, wenn die Sensoreinrichtung auf einer Tellerscheibe der Walzbandage angeordnet ist, insbesondere auf derjenigen Tellerscheibe, die einer den Erregermotor tragenden Tellerscheibe gegenüberliegt beziehungsweise auf derjenigen Tellerscheibe, auf deren Seite ein Fahrmotor zum Antrieb der Rotationsbewegung und damit der Fahrbewegung der Walzbandage um deren Rotationsachse angeordnet ist. Insbesondere ist die Sensoreinrichtung dabei mittig (in Bezug auf den Kreismittelpunkt der Tellerscheibe) auf der Tellerscheibe angeordnet, so dass im Idealfall die Rotationsachse der Walzbandage durch die Sensoreinrichtung verläuft. Die Sensoreinrichtung ist insbesondere direkt bzw. unmittelbar auf der Tellerscheibe der Walzbandage angeordnet. Grundsätzlich kann die Sensoreinrichtung auf jeder der beiden Tellerscheiben der Walzbandage angeordnet sein, jedoch ist im Bereich der Mitte der Tellerscheibe häufig lediglich auf der Seite des Fahrmotors Platz für die Sensoreinrichtung vorhanden. Auf der gegenüberliegenden Seite ist dagegen in der Regel der Erregermotor des Erregers bzw. Vibrationserregers mittig an der Tellerscheibe angeordnet. Eine Anordnung der Sensoreinrichtung auf der Tellerscheibe auf der Seite des Fahrmotors ist daher bei den bekannten Grundkonstruktionen in der Regel am einfachsten zu realisieren.

Im Asphaltbau ist es häufig wichtig, dass die Bodensteifigkeit an beiden quer zur Arbeitsrichtung außen liegenden Enden der Walzbandage, d.h. im Bereich der beiden Stirnseiten der Walzbandage, gemessen wird. Es ist daher bevorzugt, dass zwei Sensoreinrichtungen, insbesondere in der vorstehend beschriebenen erfindungsgemäßen Weise, an der Walzbandage quer zu einer Arbeitsrichtung der Bodenverdichtungswalze voneinander beabstandet vorhanden sind, wobei hier eine Anordnung an jeweils einer der Tellerscheiben der Walzbandage bevorzugt ist. Die jeweiligen Sensoreinrichtungen befinden sich also jeweils an den sich gegenüberliegenden stirnseitigen Randbereichen der Walzbandage. Als Randbereich wird beispielsweise ein quer zur Arbeitsrichtung außen liegender Stirnseitenabschnitt der Walzbandage bezeichnet, der beispielsweise maximal 10%, bevorzugt maximal 20%, und insbesondere bevorzugt maximal 30% der Gesamterstreckung der Walzbandage entlang ihrer Rotationsachse umfasst. Die Walzbandage weist auf ihren beiden gegenüberliegenden Stirnseiten jeweils einen derartigen Randbereich auf. Jeweils eine der beiden Sensoreinrichtungen ist gemäß einer bevorzugten Ausführungsform also in diesen quer zur Arbeitsrichtung voneinander beabstandeten Randbereichen der Walzbandage angeordnet. Bei den zwei Sensoreinrichtungen kann es sich beispielsweise auch um eine erfindungsgemäße Sensoreinrichtung an einer Tellerscheibe, insbesondere auf der Seite des Fahrmotors der Walzbandage, und eine herkömmliche Sensoreinrichtung auf der gegenüberliegenden Seite der Walzbandage, beispielsweise am Maschinenrahmen oder am Bandagenlager, handeln. Bevorzugt ist es allerdings, wenn auch auf der dem Fahrmotor gegenüberliegenden Tellerscheibe eine Sensoreinrichtung in erfindungsgemäßer Weise, d.h. mit der Walzbandage mitdrehend, angeordnet ist. Aufgrund der mittigen Anordnung des Erregermotors können die Beschleunigungssensoren dieser Sensoreinrichtung allerdings häufig nicht genau mittig an der Tellerscheibe angeordnet werden. Es hat sich allerdings gezeigt, dass es ausreicht, wenn die Beschleunigungssensoren dieser Sensoreinrichtung auf der Tellerscheibe auf der Seite des Erregermotors von der Mitte der Tellerscheibe bzw. von der Rotationsachse der Walzbandage und/oder der Erregerwelle versetzt angeordnet sind. Auch ist es bevorzugt, dass diese Beschleunigungssensoren der vibrationsmotorseitigen Sensoreinrichtung ebenfalls Messachsen aufweisen, die um 90° zueinander versetzt angeordnet sind und die in einer Ebene liegen, die senkrecht auf der Rotationsachse der Walzbandage und/oder der Erregerwelle angeordnet ist. Insgesamt lässt sich durch die zwei an gegenüberliegenden Stirnseiten der Walzbandage angeordneten Sensoreinrichtungen auf beiden quer zur Arbeitsrichtung beabstandeten Seiten der Walzbandage die Bodensteifigkeit separat messen.

Die Sensoreinrichtungen des Standes der Technik werden typischerweise über Kabelverbindungen vom Bordnetz der Bodenverdichtungswalze mit elektrischer Energie versorgt. Kabelverbindungen vom Maschinenrahmen aus in die sich drehende und schwingende bzw. vibrierende Walzbandage hinein sind dagegen sehr beschädigungsanfällig und nur mit einem hohen konstruktiven Aufwand zu realisieren. Eine bevorzugte erfindungsgemäße Lösung besteht darin, dass die Sensoreinrichtung eine vom (rahmenseitigen) Bordnetz der Bodenverdichtungswalze unabhängige elektrische Energieversorgung aufweist. Beispielsweise kann die Sensoreinrichtung eine Batterie, von dem die Sensoreinrichtung mit elektrischer Energie versorgt wird. Darüber hinaus können noch andere elektrische Energiespeicher vorgesehen sein, die die elektrische Energieversorgung der Sensoreinrichtung gewährleisten. Die erfindungsgemäßen elektrischen Energiespeicher sind mit der Sensoreinrichtung direkt an der Walzbandage befestigt, sodass keine anfälligen Kabelverbindungen verlegt werden müssen. Insbesondere ist die elektrische Energieversorgung der Sensoreinrichtung damit unabhängig von Kabelverbindungen zwischen dem feststehenden Maschinenrahmen und der rotierenden Walzbandage. Auch wenn die Bodenverdichtungswalze ein Bordnetz oder eine weitere elektrische Energiequelle für andere Verbraucher aufweist, so ist die erfindungsgemäße elektrische Energieversorgung für die Sensoreinrichtung getrennt von dieser ausgebildet.

Um den Wartungsaufwand zu verringern, beispielsweise um zu verhindern, dass ein leerer elektrischer Energiespeicher ausgetauscht werden muss, ist es jedoch optimal, wenn die Sensoreinrichtung eine Einrichtung zur Erzeugung von elektrischer Energie umfasst oder zumindest an eine solche Einrichtung angeschlossen ist. Besonders geeignet sind sogenannte *"Energy Harvesting"-*Einrichtungen, die aus der Vibration bzw. Schwingung und/oder der Rotationsbewegung der Walzbandage elektrische Energie erzeugen. In einer bevorzugten Ausführungsform umfasst die Sensoreinrichtung also eine *Energy Harvesting*-Vorrichtung, über die die elektrische Energieversorgung der Sensoreinrichtung erfolgt. Eine solche Vorrichtung kann beispielsweise nach dem Prinzip eines Lineargenerators aufgebaut sein. Darüber hinaus gibt es weitere Möglichkeiten, elektrische Energie für den Betrieb der Sensoreinrichtung an bzw. in der Walzbandage zu erzeugen. In einer weiteren bevorzugten Ausführungsform ist es beispielsweise vorgesehen, dass die elektrische Energieversorgung der Sensoreinrichtung durch einen von einer Erregerwelle der Erregereinrichtung angetriebenen Generator erfolgt. Bei der Erregereinrichtung handelt es sich üblicherweise um einen mechanisch oder hydraulisch angetriebenen Rotationserreger, der eine Unwucht an einer Erregerwelle in Rotation versetzt und dadurch Schwingungen bzw. Vibrationen erzeugt. Die Erregerwelle verläuft dabei von einer der Tellerscheiben zumeist innerhalb der Rotationsachse der Walzbandage bis zur Mitte der Walzbandage quer zur Arbeitsrichtung. Der Erregermotor sitzt typischerweise auf der äußeren Stirnseite einer Tellerscheibe, so dass die Erregerwelle die Tellerscheibe von außen kommend durchdringt und in die Walzbandage hinein verläuft. Diese rotierende Welle kann nun direkt an der Walzbandage als Energiequelle genutzt werden. Es ist dafür zweckmäßig, die rotierende Erregerwelle zum Antrieb eines Generators, beispielsweise eines Dynamos, einzusetzen, über den die Sensoreinrichtung mit elektrischer Energie versorgt wird. Der Generator ist also an die Erregerwelle der Erregereinrichtung angeschlossen und wird von dieser angetrieben. Auf diese Weise ist die elektrische Energieversorgung der Sensoreinrichtung dauerhaft gesichert.

Der Generator könnte grundsätzlich direkt an die Erregerwelle angeschlossen sein bzw. direkt von der Erregerwelle angetrieben werden. Um den Antrieb des Generators jedoch möglichst unabhängig von der konkreten Ausgestaltung der Erregerwelle zu machen, ist es allerdings bevorzugt, wenn ein sogenannter Wellendurchtrieb die Erregerwelle der Erregereinrichtung und den Generator miteinander verbindet und der Generator über den Wellendurchtrieb von der Erregerwelle angetrieben wird. Der Wellendurchtrieb bezeichnet also ein Verbindungsstück zwischen der Erregerwelle und dem Generator, das die Rotationsbewegung von der Erregerwelle auf den Generator überträgt. Auf diese Weise kann die Platzierung des Generators in Bezug zur Erregerwelle variiert werden. Beispielsweise ist es möglich, dass der Wellendurchtrieb die Tellerscheibe, insbesondere die dem Erregermotor gegenüberliegende Tellerscheibe, sprich die Tellerscheibe auf der Seite des Fahrmotors, nach außen hin durchdringt. Insgesamt sitzt der Erregermotor dann auf der quer zur Arbeitsrichtung außenliegenden Stirnseite dieser Tellerscheibe. Der Generator ist, beispielsweise zusammen mit der Sensoreinrichtung, auf der quer zur Arbeitsrichtung äußeren Stirnseite dieser Tellerscheibe angeordnet, sprich derjenigen Tellerscheibe, die auf der den Erregermotor gegenüberliegenden Seite der Walzbandage liegt und an der sich der Fahrmotor der Walzbandage befindet. An einem Ende der Erregerwelle wird diese vom Erregermotor in Rotation versetzt. An ihrem gegenüberliegenden Ende ist sie über den Wellendurchtrieb mit dem Generator der Sensoreinrichtung verbunden und treibt diesen an. Insgesamt lässt sich auf diese Art eine zuverlässige und vom Bordnetz der Maschine unabhängige elektrische Energieversorgung der Sensoreinrichtung erreichen.

Darüber hinaus ist es in einer bevorzugten Ausführungsform vorgesehen, dass der Generator dazu ausgebildet ist, die Rotationsposition einer Unwucht auf der Erregerwelle zu detektieren. Hierfür ist die Wicklung des Generators bevorzugt derart ausgeführt, dass ein messbarer Spannungsimpuls generiert wird, wenn die Erregerwelle eine bestimmte Position relativ zum Stator des Generators erreicht. Gegebenenfalls kann auch eine von der Spannungsversorgung der Sensoreinrichtung unabhängige Induktionsspule vorgesehen sein, die mindestens einen Impuls erzeugt, der mit dem Rotationswinkel der Unwuchtwelle korrespondiert. Der Vorteil der messtechnischen Erfassung des momentanen Rotationswinkels der Erregerwelle liegt in der genaueren Berechnung der Bodensteifigkeit. Zur Berechnung der Bodensteifigkeit wird häufig der Ansatz gewählt, die von den Unwuchten erzeugten Beschleunigungen von den gemessenen Bandagenbeschleunigungen zu subtrahieren. Dies muss phasenrichtig erfolgen, um ein genaues Ergebnis zu erhalten. Somit kann die Messung des korrekten Phasenwinkels für die Unwucht genauer sein, als die Schätzung des Phasenwinkels aus den gemessenen Bandagenbeschleunigungen.

Weitere vorteilhafte Weiterbildungen der Erfindung betreffen die Übertragung der von der Sensoreinrichtung ermittelten Messwerte. Auch hier ist eine kabelgebundene Übertragung aus den vorstehend genannten Gründen nachteilig. Aus diesem Grund ist die Sensoreinrichtung bevorzugt derart ausgebildet, dass sie eine Sendeeinrichtung umfasst, die die Messergebnisse der Sensoreinrichtung kabellos zu einer, insbesondere mobilen, Empfangseinrichtung überträgt. Hierfür können grundsätzlich sämtliche im Stand der Technik bekannten Möglichkeiten zur kabellosen Datenübertragung per Funk genutzt werden, beispielsweise WLAN. Die Sendeeinrichtung sendet dabei entweder die Rohdaten der Messung der Sensoreinrichtung oder gegebenenfalls bereits die daraus berechneten Bodensteifigkeitswerte. Im letzteren Fall umfasst die Sensoreinrichtung eine geeignete Einrichtung zur elektronischen Datenverarbeitung, wie beispielsweise einen entsprechend programmierten Mikroprozessor. Die Empfangseinrichtung kann beispielsweise in den Bordcomputer der Bodenverdichtungswalze integriert ausgebildet sein. Sie empfängt die von der Sendeeinrichtung versendeten Messdaten und/oder errechneten Werte für die Bodensteifigkeit. Die Empfangseinrichtung umfasst bevorzugt ebenfalls eine Anzeigeeinrichtung, über die die empfangenen und/oder berechneten Werte für einen Bediener angezeigt werden. Darüber hinaus umfasst die Empfangseinrichtung beispielsweise einen Datenspeicher, in den die Messdaten und/oder die berechneten Daten der Bodensteifigkeit gespeichert und später ausgelesen werden können. Auf diese Weise kann im Nachhinein eine effiziente Auswertung der gesamten Daten eines speziellen Arbeitsvorganges, beispielsweise einer Baustelle oder eines Arbeitstages, erfolgen. In einer bevorzugten Ausführungsform ist die Empfangseinrichtung allerdings nicht Teil des Bordcomputers der Bodenverdichtungswalze, sondern eine mobile Empfangseinrichtung. Derartige mobile Empfangseinrichtungen können bei Verwendung von kompatiblen Datenübertragungswegen beispielsweise konventionelle Tablet-Computer oder Smartphones sein. Auf diesen muss dann nur ein entsprechendes Programm bzw. eine App installiert werden, die die von der Sendeeinrichtung gesendeten Daten empfängt und/oder speichert und/oder anzeigt und/oder auswertet.

Die Lösung der eingangs gestellten Aufgabe der Erfindung gelingt ebenfalls mit einem Verfahren zur Ermittlung der Bodensteifigkeit während der Bodenverdichtung mit einer Bodenverdichtungswalze, insbesondere einer Tandemwalze oder einem Walzenzug, bevorzugt mit einer wie vorstehend beschriebenen Bodenverdichtungswalze, mit den Schritten: Messen der Beschleunigung direkt an und im Bereich der Rotationsachse einer im Arbeitsbetrieb rotierenden Walzbandage, Ermitteln der Bodensteifigkeit aus den Messwerten und kabelloses Übertragen der Messwerte und/oder der Bodensteifigkeitswerte an eine Empfangseinrichtung. Der zentrale Gedanke der Erfindung liegt auch beim Verfahren darin, dass die Beschleunigung direkt und unmittelbar an den ungedämpften, rotierenden Bestandteilen der Walzbandage im Bereich der Rotationsachse gemessen wird, sodass jede Messungenauigkeit durch eine Dämpfung des Signals, beispielsweise durch eine gewollte und/oder ungewollte Schwingungsentkopplung, vermieden wird. Insofern gelten sämtliche Merkmale, Wirkungen und Vorteile der vorstehend beschriebenen Bodenverdichtungswalze mit der erfindungsgemäßen Sensoreinrichtung ebenfalls für das erfindungsgemäße Verfahren. Insbesondere bedeutet dies, dass das erfindungsgemäße Verfahren für den Einsatz bei schwingungserregten Walzbandagen vorgesehen ist und während des Betriebs des Schwingungserregers zum Einsatz kommt. Zur Vermeidung von Wiederholungen wird vollumfänglich auf die vorstehenden Erläuterungen Bezug genommen.

Auch für das Verfahren ist es erfindungsgemäß vorgesehen, dass das Messen der Beschleunigung durch zwei Beschleunigungssensoren erfolgt, deren Messachsen um einen Winkel, insbesondere um 90°, zueinander versetzt angeordnet sind. Auf diese Weise lässt sich statt einer nur punktuellen Messung mit einem einzigen Beschleunigungssensor und nur einer Messachse während des Arbeitsbetriebes der Bodenverdichtungswalze eine kontinuierliche Messung der Bodensteifigkeit durchführen.

Ebenfalls ist es bevorzugt, dass das Ermitteln der Bodensteifigkeit aus den Messwerten das Ermitteln der Richtung der Erdbeschleunigung aus den Messwerten der beiden Beschleunigungssensoren umfasst. Hierzu kann, wie bereits beschrieben, ebenfalls ein Tiefpass-Filter und gegebenenfalls ein Kalman-Filter eingesetzt werden. Auf diese Weise lässt sich die Messgenauigkeit des Verfahrens erhöhen.

Die Erfindung wird nachstehend anhand der in den Figuren gezeigten Ausführungsbeispiele näher erläutert. Es zeigen schematisch:
- Fig.1: eine Seitenansicht einer Tandemwalze;
- Fig. 2: eine Seitenansicht eines Walzenzuges;
- Fig. 3: eine Schnittansicht durch eine Walzbandage entlang der Linie III der Figuren 1 und 2;
- Fig. 4: eine Seitenansicht einer Sensoreinrichtung;
- Fig.5: eine alternative Anordnung der Beschleunigungssensoren der Sensoreinrichtung gemäß Fig. 4;
- Fig. 6: ein Ablaufdiagramm des erfindungsgemäßen Verfahrens;
- Fig. 7: eine Seitenansicht auf eine handgeführte Doppelvibrationswalze.

Gleiche und gleich wirkende Bauteile sind in den Figuren mit gleichen Bezugsziffern bezeichnet. Sich wiederholende Bauteile sind nicht in jeder Figur gesondert bezeichnet.

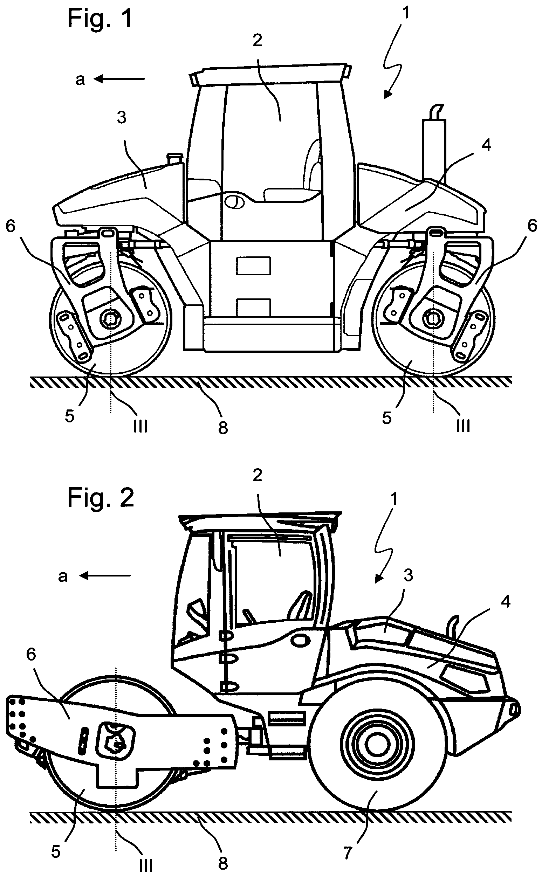

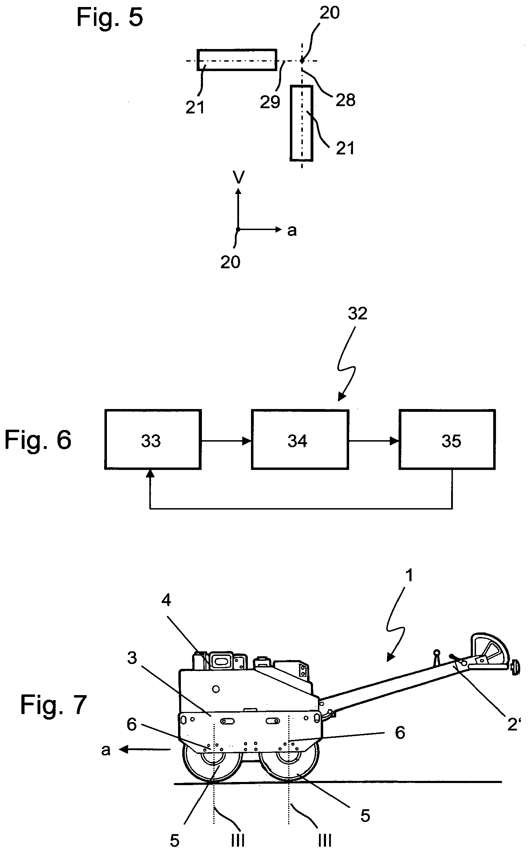

Die Figuren 1, 2 und 7 zeigen verschiedene erfindungsgemäße Bodenverdichtungswalzen 1, genauer eine Bodenverdichtungswalze vom Typ Tandemwalze (Fig. 1), eine Bodenverdichtungswalze vom Typ Walzenzug (Fig. 2) und eine Bodenverdichtungswalze vom Typ handgeführte Doppelvibrationswalze (Fig. 7). Die Bodenverdichtungswalzen aus den Figuren 1 und 2 weisen einen Fahrerstand 2 und einen Maschinenrahmen 3 auf. Sie werden von einem Antriebsaggregat 4, zumeist einem Dieselverbrennungsmotor, angetrieben und bewegen sich im Arbeitsbetrieb in Arbeitsrichtung a über einen zu verdichtenden Boden 8. Die Arbeitsrichtung a ist in den Figuren als die Vorwärtsrichtung der Bodenverdichtungswalzen 1 definiert. Die Bodenverdichtungswalzen 1 können allerdings im Arbeitsbetrieb auch genauso gut rückwärts eingesetzt werden, und sich entgegen der Arbeitsrichtung a bewegen. Zur verständlichen Beschreibung bezeichnet die Arbeitsrichtung a allerdings die in den Figuren angegebene Vorwärtsrichtung. Die Tandemwalze aus Fig. 1 weist insgesamt zwei Walzbandagen 5 auf, eine in Arbeitsrichtung a vorne und eine in Arbeitsrichtung a hinten an der Tandemwalze angeordnet. Die Walzbandagen 5 sind über Bandagenlager 6, die sich nicht mit der Walzbandage 5 mitdrehen, mit dem Maschinenrahmen 3 verbunden. Beide Walzbandagen 5 der Tandemwalze aus Fig. 1 werden über im Stand der Technik bekannte Schemelgelenke gelenkt. Das Fahrwerk des Walzenzuges der Fig. 2 weist nur eine in Arbeitsrichtung a vorne angeordnete Walzbandage 5 auf und umfasst in Arbeitsrichtung a hinten ein Paar Räder 7, beispielsweise Gummiräder. Auch die Walzbandage 5 des Walzenzuges ist über ein feststehendes und damit nicht mitrotierendes Bandagenlager 6 mit dem Maschinenrahmen 3 verbunden. Der Walzenzug und insbesondere die Walzbandage 5 des Walzenzuges sind über ein Knickgelenk, das sich im Wesentlichen unter dem Fahrerstand 2 befindet, lenkbar. Bei der handgeführten Doppelvibrationswalze gemäß Fig. 7 findet sich im Prinzip ein vergleichbarer Aufbau. Anstelle eines Fahrstandes ist dort eine Führungsdeichsel 2' vorgesehen, über die die Maschinen im Arbeitsbetrieb von einem Bediener gesteuert wird.

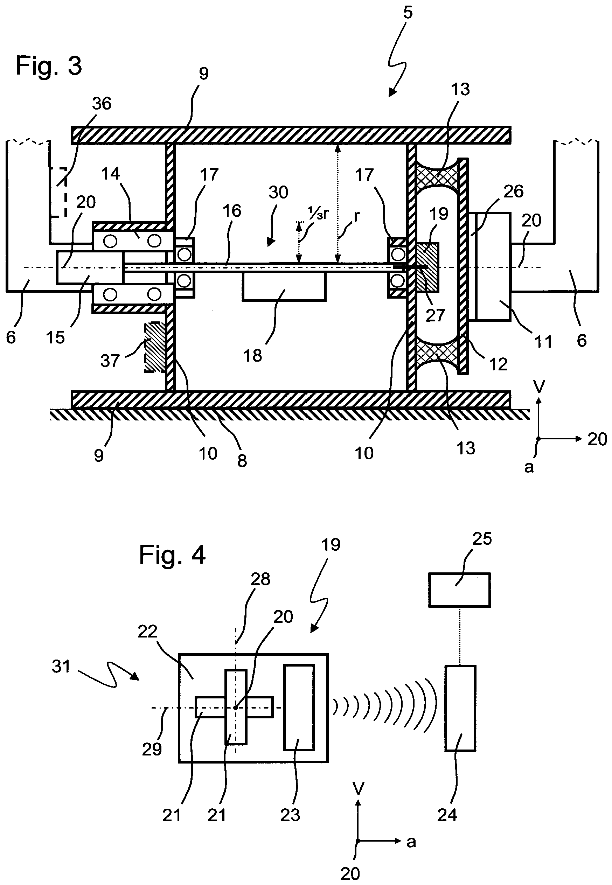

Der Aufbau und die Funktion der Walzbandagen 5 der Bodenverdichtungswalzen 1 wird anhand von Fig. 3 näher erläutert. Fig. 3 zeigt die Walzbandagen 5 in einer Schnittansicht entlang der Linie III der Figuren 1, 2 und 3. Zur Orientierung sind im in Fig. 3 angezeigten Koordinatensystem die Vertikalrichtung V, die senkrecht dazu verlaufende horizontale Arbeitsrichtung a und die ebenfalls horizontal und quer zur Arbeitsrichtung verlaufende Rotationsachse 20 anzeigt. Die Walzbandage 5 umfasst einen Außenmantel 9 in Form eines Hohlzylinders, mit dem sie auf dem zu verdichtenden Boden 8 aufliegt. Die Walzbandage 5 weist an den quer zur Arbeitsrichtung a außen liegenden Stirnseiten Tellerscheiben 10 auf, die sich über den Innenraum des Hohlzylinders erstrecken. An einer der Tellerscheiben 10, in der Fig. 3 rechts dargestellt, befindet sich der Fahrmotor 11, beispielsweise ein Hydraulikmotor. Der Fahrmotor 11 ist einerseits über ein Bandagenlager 6 mit dem nicht dargestellten Maschinenrahmen 3 verbunden. Andererseits ist der Fahrmotor 11 über ein Drehgelenk 26 mit einer Antriebsscheibe 12 verbunden, die wiederum über Dämpfungselemente 13, insbesondere elastische Dämpfungselemente 13, an der Tellerscheibe 10 befestigt ist. Die Dämpfungselemente 13 entkoppeln die Antriebsscheibe 12 und damit das Drehgelenk 26 und den Fahrmotor 11 von den Vibrationen bzw. Schwingungen der Walzbandage 5. Durch den Betrieb des Fahrmotors 11 wird die Walzbandage 5 in Rotation um die Rotationsachse 20 versetzt, wodurch sich die Bodenverdichtungswalze auf dem Boden 8 in oder entgegen der Arbeitsrichtung a fortbewegt. In Fig. 3 sind diejenigen Bestandteile, die sich im Arbeitsbetrieb der Bodenverdichtungswalze mit der Walzbandage 5 um die Rotationsachse 20 drehen, zur weiteren Verdeutlichung schraffiert dargestellt. Diejenigen Bestandteile der Walzbandage 5, die sich nicht mit dieser mitdrehen, sind dagegen nicht schraffiert.

Auf der dem Fahrmotor 11 gegenüberliegenden Seite der Walzbandage 5 befindet sich ein Erregermotor 15, beispielsweise ein Hydraulikmotor, der Teil einer Erregereinrichtung 30 ist. Der Erregermotor 15 dreht sich nicht mit der Walzbandage um die Rotationsachse 20 mit und ist über ein Fahrlager 14 mit der Tellerscheibe 10 verbunden. Vom Erregermotor 15 erstreckt sich eine Erregerwelle 16 durch die Tellerscheibe 10 hindurch ins Innere der Walzbandage 5 hinein. Die Erregerwelle 16 ist von Wellenlagern 17 gehalten, die beispielsweise an den Tellerscheiben 10 der Walzbandage 5 angeordnet sind. An der Erregerwelle 16 befindet sich in an sich bekannter Weise eine Unwucht 18. Der Erregermotor 15 versetzt die Erregerwelle 16 in Rotationsbewegungen, im gezeigten Ausführungsbeispiel ebenfalls um die Rotationsachse 20. Durch die Rotationsbewegung der Erregerwelle 16 wird ebenfalls die Unwucht 18 um die Rotationsachse 20 rotiert und erzeugt dabei Schwingungen bzw. Vibrationen der Walzbandage 5, die zur Verdichtung des Bodens 8 genutzt werden.

Auf der Tellerscheibe 10, die auf der Seite des Fahrmotors 11 liegt, ist eine Sensoreinrichtung 19 angeordnet. Die Sensoreinrichtung 19 dreht sich im Arbeitsbetrieb mit der Walzbandage 5 mit. Insbesondere ist die Sensoreinrichtung 19 direkt bzw. unmittelbar auf der Tellerscheibe 10 angeordnet. Sie ist dabei derart in der Mitte der Tellerscheibe 10 platziert, dass die Rotationsachse 20, um die sich die Walzbandage 5 dreht und um die koaxial hierzu ebenfalls die Erregerwelle 16 rotiert, durch die Sensoreinrichtung 19 verläuft. Ganz allgemein ist die Sensoreinrichtung 19 beispielsweise nicht weiter als ein Drittel des Radius r zwischen der Rotationsachse 20 und der Innenseite der Mantelfläche der Walzbandage 5 von der Rotationsachse 20 entfernt. Sowohl der Radius r als auch ein Drittel des Radius r von der Rotationsachse 20 aus gesehen sind in der Figur 3 beispielhaft gezeigt. Die Sensoreinrichtung 19 befindet sich zwischen der Tellerscheibe 10 und der Antriebsscheibe 12 in einem Freiraum, der durch die Ausdehnung der Dämpfungselemente 13 geschaffen wird. Die Antriebsscheibe 12 ist dabei in Richtung der Rotationsachse von der Tellerscheibe 10 beabstandet angeordnet, insbesondere derart, dass keine Gefahr besteht, dass die Antriebsscheibe 12 durch die elastischen Bewegungen der Dämpfungselemente 13 mit der Sensoreinrichtung 19 kollidiert. Mit anderen Worten ist die Antriebsscheibe 12 über die Dämpfungselemente 13 derart von der Tellerscheibe 10 beabstandet, dass sich zwischen der Antriebsscheibe 12 und der Tellerscheibe 10 sowohl ein Montageraum für die Sensoreinrichtung 19 als auch ein Sicherheitsspielraum für die Bewegungen der Antriebsscheibe 12 aufgrund der elastischen Verformung der Dämpfungselemente 13 befindet. Die Sensoreinrichtung 19 befindet sich auf der quer zur Arbeitsrichtung a äußeren Seite der Tellerscheibe 10 bzw. der äußeren Stirnseite der Walzbandage 5. Damit liegt die Sensoreinrichtung 19 auf der der Unwucht 18 bzw. insbesondere der Erregerwelle 16 gegenüberliegenden Seite der Tellerscheibe 10. Um dennoch die elektrische Energieversorgung der Sensoreinrichtung 19 über die Erregerwelle 16 zu realisieren, ist ein Wellendurchtrieb 27 vorgesehen, der sich durch die Tellerscheibe 10 hindurcherstreckt, in dieser rotierbar gelagert ist, und die Erregerwelle 16 mit einem Generator (s. Fig. 4) der Sensoreinrichtung verbindet. Der Wellendurchtrieb 27 ist im gezeigten Ausführungsbeispiel als axiale Verlängerung der Erregerwelle 16 entlang der Rotationsachse 20 ausgebildet, die die Tellerscheibe 10 durchdringt und so den Anschluss eines Generators der Sensoreinrichtung 19 an die Rotationsbewegung der Erregerwelle 16 ermöglicht. Insgesamt kann so die elektrische Energieversorgung der Sensoreinrichtung 19, insbesondere ausschließlich und autark von einem Bordnetz der Bodenverdichtungsmaschine 1, durch die Arbeit des Erregermotors 15 erfolgen, wodurch kein Austausch gegebenenfalls vorhandener elektrischer Energiespeicher an der Sensoreinrichtung 19 notwendig ist.

Die Sensoreinrichtung 19 ist zur Bestimmung der Bodensteifigkeit während des Arbeitsbetriebes der Bodenverdichtungswalze 1 ausgebildet, wie nachstehend noch näher erläutert wird. Aufgrund der Anordnung der Sensoreinrichtung 19 direkt an der Walzbandage 5, und zwar direkt an einem Bestandteil der Walzbandage 5, dessen Vibrationsbewegung noch nicht durch ein Dämpfungselement oder ein Lagerspiel eines Fahrgelenkes bzw. Drehgelenkes abgedämpft wurde, kann die Sensoreinrichtung 19 die Bodensteifigkeit besonders exakt bestimmen. Dies ist insbesondere an der gezeigten Position der Sensoreinrichtung 19 mittig an der Tellerscheibe 10 auf der Seite des Fahrmotors 11 möglich, da sich die Sensoreinrichtung 19 hier direkt auf der Rotationsachse 20 der Walzbandage 5 befindet. Allerdings nimmt die Sensoreinrichtung 19 aufgrund ihrer Anordnung an einer der Tellerscheiben 10 nur die Bodensteifigkeit auf derjenigen Seite der Walzbandage 5 auf, an der sich die Tellerscheibe 10 befindet. Gerade bei Asphaltanwendungen ist es allerdings häufig gewünscht, die Bodensteifigkeit auf beiden quer zur Arbeitsrichtung a voneinander beabstandeten Stirnseiten der Walzbandage 5 separat zu messen. Auf der dem Fahrmotor 11 gegenüberliegenden Seite der Walzbandage 5 ist allerdings die Mitte der Tellerscheibe 10 bereits durch die Erregereinrichtung 30, insbesondere den Erregermotor 15 und die Erregerwelle 16 besetzt. In einer bevorzugten Ausführungsform ist es daher vorgesehen, die erfindungsgemäße Sensoreinrichtung 19 auf der Seite des Fahrmotors 11 der Walzbandage 5 mit einer konventionellen Sensoreinrichtung 36 zu kombinieren, die auf der gegenüberliegenden Seite der Walzbandage 5 angeordnet ist. Die konventionelle Sensoreinrichtung 36 zeichnet sich dadurch aus, dass sie am Maschinenrahmen 3 oder am Bandagenlager 6 der Walzbandage 5 angeordnet ist und sich daher nicht mit der Walzbandage 5 mit dreht. Es kann daher auf eine im Stand der Technik bekannte Sensoreinrichtung 36 zur Kombination mit der erfindungsgemäßen Sensoreinrichtung 19 zurückgegriffen werden. Die Sensoreinrichtung 36 liefert vergleichsweise weniger präzise Messwerte als die Sensoreinrichtung 19, da die Sensoreinrichtung 36 nur Vibrationen bzw. Schwingungen der Walzbandage 5 wahrnimmt, die schon durch Dämpfungselemente und/oder das Fahrlager 14 bzw. dessen Spiel, abgeschwächt wurden. In Kombination mit der erfindungsgemäßen Sensoreinrichtung 19 auf der gegenüberliegenden Seite der Walzbandage 5 lassen sich allerdings dennoch genauere Messergebnisse und damit zuverlässigere Werte für die Bodensteifigkeit erreichen, als im Stand der Technik mit zwei konventionellen Sensoreinrichtungen 36 üblich.

Eine weitere bevorzugte Ausführungsform der Erfindung sieht vor, dass die erste erfindungsgemäße Sensoreinrichtung 19 mit einer zweiten erfindungsgemäßen Sensoreinrichtung 37 kombiniert wird. Die zweite Sensoreinrichtung 37 ist identisch mit der Sensoreinrichtung 19 ausgebildet, nur im Unterschied zu dieser nicht in der Mitte der Tellerscheibe 10 auf der Seite des Fahrmotors 11 angeordnet, sondern auf der Tellerscheibe 10 auf der Seite des Erregermotors 15 und von der Mitte der Tellerscheibe 10 radial zur Rotationsachse 20 nach außen versetzt. Die Sensoreinrichtung 37 ist also mit anderen Worten auf der Seite des Erregermotors 15 auf der quer zur Arbeitsrichtung a außen liegenden Seite der Tellerscheibe 10 bzw. der Stirnseite der Walzbandage 5 angeordnet. Aufgrund des Erregermotors 15 ist die Sensoreinrichtung 37 von der Mitte der Tellerscheibe 10 nach außen in Richtung des Außenmantels 9 der Walzbandage 5 versetzt angeordnet. Bis auf diese unterschiedliche und insbesondere zur Rotationsachse 20 versetzte Anordnung der Sensoreinrichtung 37 ist die Sensoreinrichtung 37 allerdings identisch zur Sensoreinrichtung 19 ausgebildet. Die unterschiedliche Anordnung der Sensoreinrichtung 37 muss bei der Berechnung der Bodensteifigkeit aus den Messwerten der Sensoreinrichtung 37 berücksichtigt werden. Auch die Sensoreinrichtung 37 kann beispielsweise über die Erregerwelle 16 mit elektrischer Energie versorgt werden, indem ein Getriebe angeordnet ist, das die Rotation der Erregerwelle 16 auf eine Antriebswelle eines Generators der Sensoreinrichtung 37 überträgt. Die Kombination zweier erfindungsgemäßer Sensoreinrichtungen 19, 37 ermöglicht eine sehr präzise Bestimmung der Bodensteifigkeit während der Verdichtung des Bodens 8 auf beiden Stirnseiten der Walzbandage 5 und ist daher auch für Asphaltanwendungen bestens geeignet.

Die Funktion der Sensoreinrichtung 19 wird anhand der Fig. 4 näher erläutert. Die Sensoreinrichtung 19 umfasst einen über den Wellendurchtrieb 27 von der Erregerwelle 16 angetriebenen Generator 22, der die Sensoreinrichtung 19 mit elektrischer Energie versorgt. Darüber hinaus umfasst die Sensoreinrichtung 19 im vorliegenden Ausführungsbeispiel insgesamt zwei Beschleunigungssensoren 21 mit einer ersten Messachse 28 und einer zweiten Messachse 29. Die Beschleunigungssensoren 21 sind zur Bestimmung einer Beschleunigung entlang der Messachsen 28, 29 ausgebildet. Dabei sind die Beschleunigungssensoren 21 derart zueinander ausgerichtet, dass ihre Messachsen 28, 29 in einer gemeinsamen Projektionsebene zueinander senkrecht stehen. Gleichzeitig stehen die Messachsen 28, 29 senkrecht zur Rotationsachse 20 der Walzbandage 5 bzw. der Erregerwelle 16. Im gezeigten Ausführungsbeispiel der Fig. 4 schneiden beiden Messachsen 28, 29 die Rotationsachse 20 senkrecht bzw. verlaufen somit in Radialrichtung. Aufgrund dieser Ausrichtung der Messachsen 28, 29 zueinander, und insbesondere auch zur Rotationsachse 20, lässt sich aus den Messwerten der Beschleunigungssensoren 21 die Richtung der Erdbeschleunigung und ebenfalls die Bodensteifigkeit kontinuierlich ermitteln. Die Sensoreinrichtung 19 umfasst darüber hinaus eine Sendeeinrichtung 23, die zur kabellosen Übertragung von Daten von der Sensoreinrichtung 19 an eine Empfangseinrichtung 24 ausgebildet ist. Die Ermittlung der Bodensteifigkeit aus den Messwerten der Beschleunigungssensoren 21 kann entweder direkt durch die Sensoreinrichtung 19 geschehen, oder durch die Empfangseinrichtung 24. Ergänzend oder alternativ kann hierzu auch auf einen Drehwinkelsensor zurückgegriffen werden, der die Drehlage der Bandage und damit der Sensoreinrichtung ermittelt.

Je nachdem werden entweder nur die Messdaten der Beschleunigungssensoren 21 und/oder die berechneten Bodensteifigkeitswerte von der Sendeeinrichtung 23 an die Empfangseinrichtung 24 übertragen. Die Empfangseinrichtung 24 ist mit einer Anzeigeeinrichtung 25 verbunden, die die Messwerte und/oder die berechneten Bodensteifigkeitswerte für einen Bediener anzeigt. Darüber hinaus kann die Empfangseinrichtung die Daten abspeichern, sodass diese im Nachhinein oder auch kontinuierlich auslesbar sind und eine genaue Auswertung des Arbeitsvorganges der Bodenverdichtungswalze ermöglicht wird. Die Empfangseinrichtung kann beispielsweise ein mobiles Handgerät, beispielsweise ein Tablet-Computer oder ein Smartphone sein.

Eine bevorzugte Ausführungsform der Erfindung sieht vor, dass die Sensoreinrichtung 19 als Nachrüstsatz 31 ausgebildet ist, der an schon bestehende Bodenverdichtungswalzen nachgerüstet werden kann. Der Nachrüstsatz 31 umfasst dabei die erfindungsgemäße Sensoreinrichtung 19 und ist zur Montage an der Tellerscheibe 10 auf der Seite des Fahrmotors 11 der Walzbandage 5 und insbesondere zum Anschluss an die Erregerwelle 16 über den Wellendurchtrieb 27 ausgebildet. Insbesondere in Kombination mit einer mobilen Empfangseinrichtung 24 lässt sich so ein Nachrüstsatz 31 bereitstellen, der vergleichsweise einfach an die schon bestehenden Strukturen einer Walzbandage 5 angebaut werden kann, wodurch die erfindungsgemäßen Vorteile nutzbar werden.

Die Figur 5 zeigt eine alternative Anordnung der Beschleunigungssensoren 21, die sowohl bei der erfindungsgemäßen Sensoreinrichtung 19 als auch bei der zweiten erfindungsgemäßen Sensoreinrichtung 37 angewendet werden können. In der gezeigten Ausführungsform stehen die Messachsen 28, 29 der Beschleunigungssensoren 21 senkrecht aufeinander. Fig. 5 zeigt eine Ausführungsform, in der die Beschleunigungssensoren 21 zwar nicht auf der Rotationsachse 20 liegen, die (virtuell verlängerten) Messachsen 28, 29 allerdings dennoch die Rotationsachse 20 schneidend ausgerichtet sind. Auch in der Ausführungsform der Fig. 5 schneiden die Messachsen 28, 29 die Rotationsachse 20 in einem Winkel von 90°. Die jeweilige Ausrichtung bzw. Anordnung der Beschleunigungssensoren 21 und der Messachsen 28, 29 muss in der Berechnung der Bodensteifigkeit entsprechend berücksichtigt werden.

Fig. 6 zeigt ein Ablaufdiagramm des erfindungsgemäßen Verfahrens 32. Das Verfahren beginnt mit dem Messen 33 der Beschleunigung durch die Beschleunigungssensoren 21, wobei die Messung direkt an sich im Arbeitsbetrieb drehenden Bestandteilen der Walzbandage 5 stattfindet, deren Schwingung bzw. Vibration ungedämpft ist, weder durch eine gewollte Dämpfung durch Dämpfungselemente noch durch eine ungewollte Dämpfung durch das Spiel von Lagern oder Gelenken. Die weiteren Schritte des Verfahrens sind das Ermitteln 34 der Bodensteifigkeit aus den Messwerten und das kabellose Übertragen 35 der Messwerte und/oder der Bodensteifigkeitswerte an eine Empfangseinrichtung 24. Je nachdem, ob die Sensoreinrichtung 19 bereits die Ermittlung der Bodensteifigkeitswerte aus den Messwerten vornimmt, kann auch erst lediglich die Übertragung 35 der Messwerte an eine Empfangseinrichtung 24 stattfinden, wobei das Ermitteln 34 der Bodensteifigkeit aus den Messwerten dann von der Empfangseinrichtung 24 durchgeführt wird. Das Verfahren wird von einer Bodenverdichtungswalze 1 mit einer Sensoreinrichtung 19, wie vorstehend beschrieben, durchgeführt. Insgesamt führt die Erfindung zu einer besonders genauen Bestimmung der Bodensteifigkeit während der Bodenverdichtung.

## Patentansprüche

1. Bodenverdichtungswalze (1), insbesondere Tandemwalze oder Walzenzug, mit
- einem Maschinenrahmen (3),
- einem Antriebsaggregat (4),
- wenigstens einer am Maschinenrahmen (3) um eine Rotationsachse (20) rotierbar gelagerten Walzbandage (5),
- einer zumindest teilweise in der Walzbandage (5) angeordneten Erregereinrichtung (30), und
- einer im Bereich der Rotationsachse (20) an der Walzbandage (5) angeordneten und sich im Betrieb der Bodenverdichtungswalze (1) mit der Walzbandage (5) mitdrehenden Sensoreinrichtung (19) zur Messung der durch eine Überfahrt der Bodenverdichtungswalze (5) erreichten Verdichtung eines Bodens (8),
**dadurch gekennzeichnet,**
**dass** die Sensoreinrichtung (19) zwei Beschleunigungssensoren (21) umfasst, die jeweils eine Messachse (28, 29) aufweisen, und dass die Messachsen (28, 29) um einen Winkel zueinander versetzt angeordnet sind.

2. Bodenverdichtungswalze (1) nach Anspruch 1,
**dadurch gekennzeichnet,**
**dass** die Messachsen (28, 29) der Beschleunigungssensoren (21) senkrecht zur Rotationsachse (20) der Walzbandage (5) ausgerichtet und/oder um 90° zueinander versetzt angeordnet sind.

3. Bodenverdichtungswalze (1) nach Anspruch 2,
**dadurch gekennzeichnet,**
**dass** die Messachsen (28, 29) der Beschleunigungssensoren (21) die Rotationsachse (20) der Walzbandage (5) schneiden.

4. Bodenverdichtungswalze (1) nach einem der vorhergehenden Ansprüche,
**dadurch gekennzeichnet,**
**dass** die Sensoreinrichtung (19) auf einer Tellerscheibe (10) der Walzbandage (5) angeordnet ist, insbesondere auf derjenigen Tellerscheibe (10), die einer den Erregermotor (15) tragenden Tellerscheibe (10) gegenüber liegt und/oder auf derjenigen Tellerscheibe (10), auf deren Seite ein Fahrmotor (11) zur Rotation der Walzbandage (5) um deren Rotationsachse (20) angeordnet ist.

5. Bodenverdichtungswalze (1) nach einem der vorhergehenden Ansprüche,
**dadurch gekennzeichnet,**
**dass** zwei Sensoreinrichtungen (19, 36, 37) an der Walzbandage (5) quer zu einer Arbeitsrichtung (a) der Bodenverdichtungswalze (1) voneinander beabstandet vorhanden sind, insbesondere jeweils an einer der Tellerscheiben (10) der Walzbandage (5) angeordnet.

6. Bodenverdichtungswalze (1) nach einem der vorhergehenden Ansprüche,
**dadurch gekennzeichnet,**
**dass** die Sensoreinrichtung (19) eine von einem Bordnetz der Bodenverdichtungswalze (1) unabhängige elektrische Energieversorgung aufweist.

7. Bodenverdichtungswalze (1) nach Anspruch 6,
**dadurch gekennzeichnet,**
**dass** die elektrische Energieversorgung der Sensoreinrichtung (19) durch einen von einer Erregerwelle (16) der Erregereinrichtung (30) angetriebenen Generator (22) erfolgt.

8. Bodenverdichtungswalze (1) nach Anspruch 7,
**dadurch gekennzeichnet,**
**dass** ein Wellendurchtrieb (27) die Erregerwelle (16) der Erregereinrichtung (30) und den Generator (22) verbindet und der Generator (22) über den Wellendurchtrieb (27) von der Erregerwelle (16) angetrieben wird.

9. Bodenverdichtungswalze (1) nach einem der Ansprüche 7 bis 8,
**dadurch gekennzeichnet,**
**dass** der Generator (22) dazu ausgebildet ist, die Rotationsposition einer Unwucht (18) auf der Erregerwelle (16) zu detektieren.

10. Bodenverdichtungswalze (1) nach einem der vorhergehenden Ansprüche,
**dadurch gekennzeichnet,**
**dass** die Sensoreinrichtung (19) eine Sendeeinrichtung (23) umfasst, die die Messergebnisse der Serisoreinrichtung (19) kabellos zu einer, insbesondere mobilen, Empfangseinrichtung (24) überträgt.

11. Verfahren (32) zur Ermittlung der Bodensteifigkeit während der Bodenverdichtung mit einer Bodenverdichtungswalze (1), insbesondere einer Tandemwalze oder einem Walzenzug, bevorzugt gemäß einem der vorhergehenden Ansprüche, mit den Schritten:
a) Messen (33) der Beschleunigung direkt an und im Bereich der Rotationsachse (20) einer im Arbeitsbetrieb rotierenden Walzbandage (5) durch zwei Beschleunigungssensoren (21), deren Messachsen (28, 29) um einen Winkel zueinander versetzt angeordnet sind,
b) Ermitteln (34) der Bodensteifigkeit aus den Messwerten und
c) kabelloses Übertragen (35) der Messwerte und/oder der Bodensteifigkeitswerte an eine Empfangseinrichtung (24).

12. Verfahren (32) nach Anspruch 11,
**gekennzeichnet durch**,
im Schritt a), das Messen (33) der Beschleunigung durch zwei Beschleunigungssensoren (21), deren Messachsen (28, 29) um 90° zueinander versetzt angeordnet sind.

13. Verfahren (32) nach einem der Ansprüche 11 bis 12,
**gekennzeichnet durch**,
im Schritt b), das Ermitteln (34) der Richtung der Erdbeschleunigung aus den Messwerten der beiden Beschleunigungssensoren (21).

14. Verfahren (32) nach einem der Ansprüche 11 bis 13,
**gekennzeichnet durch**,
im Schritt b), das Überführen der Beschleunigungen in ein nicht mit der Walzbandage (5) rotierendes Bezugssystem.

## Claims

1. A ground compaction roller (1), in particular a tandem roller or a single-drum roller, having
- a machine frame (3),
- a drive unit (4),
- at least one roller drum (5) mounted on the machine frame (3) for rotation about a rotation axis (20),
- an exciter device (30) arranged at least partially in the roller drum (5), and
- a sensor device arranged on the roller drum (5) in the region of the rotation axis (20) and that rotates together with the roller drum (5) during operation of the ground compaction roller (1) (19) for measuring the compaction of a ground (8) achieved by a passage of the ground compaction roller (5),
**characterized in that**
said sensor device (19) comprises two accelerometers (21) which each comprise a respective measuring axis (28, 29) and that the measuring axes (28, 29) are offset relative to one another by an angle.

2. The ground compaction roller (1) according to claim 1,
**characterized in that**
the measuring axes (28, 29) are oriented orthogonally to the rotation axis (20) of the roller drum (5) and/or are offset relative to one another by an angle of 90°.

3. The ground compaction roller (1) according to claim 2,
**characterized in that**
the measuring axes (28, 29) of the accelerometers (21) cross the rotation axis (20) of the roller drum (5).

4. The ground compaction roller (1) according to any one of the preceding claims,
**characterized in that**
the sensor device (19) is arranged on a cup washer (10) of the roller drum (5), in particular the cup washer (10) opposite a cup washer (10) carrying the exciter motor (15), and/or the cup washer (10) at that side at which a travel motor (11) for rotating the roller drum (5) about its rotation axis (20) is arranged.

5. The ground compaction roller (1) according to any one of the preceding claims,
**characterized in that**
two sensor devices (19, 36, 37) are provided on the roller drum (5) which are spaced from one another transversely to a working direction (a) of the ground compaction roller (1) and are in particular each arranged on a respective one of the cup washers (10) of the roller drum (5).

6. The ground compaction roller (1) according to any one of the preceding claims,
**characterized in that**
the sensor device (19) includes an electrical power supply which is independent of an on-board grid of the ground compaction roller (1).

7. The ground compaction roller (1) according to claim 6,
**characterized in that**
the sensor device (19) is supplied with electrical power through a generator (22) driven by an exciter shaft (16) of the exciter device (30).

8. The ground compaction roller (1) according to claim 7,
**characterized in that**
a through-drive shaft (27) connects the exciter shaft (16) of the exciter device (30) and the generator (22), and the generator (22) is driven by the exciter shaft (16) via said through-drive shaft (27).

9. The ground compaction roller (1) according to any one of claims 7 to 8,
**characterized in that**
the generator (22) is configured to detect the rotational position of an imbalance mass (18) on the exciter shaft (16).

10. The ground compaction roller (1) according to any one of the preceding claims,
**characterized in that**
the sensor device (19) comprises a transmitting device (23) which transmits the measurement results of the sensor device (19) wirelessly to a receiving device (24), in particular a mobile receiving device.

11. A method (32) for ascertaining the ground stiffness during ground compaction with a ground compaction roller (1), in particular a tandem roller or a single-drum roller, preferably one according to any one of the preceding claims, comprising the steps of:
a) measuring (33) the acceleration directly on, and in the region of the rotation axis (20) of, a roller drum (5) which rotates in working operation, using two accelerometers (21) having measuring axes (28, 29) which are offset relative to one another by an angle,
b) ascertaining (34) the ground stiffness from the measured values, and
c) wirelessly transmitting (35) the measured values and/or the ground stiffness values to a receiving device (24).

12. The method (32) according to claim 11,
**characterized by**
measuring (33), in step a), using two accelerometers (21) having measuring axes (28, 29) which are offset relative to one another by 90°.

13. The method (32) according to any one of claims 11 to 12,
**characterized by**
ascertaining (34), in step b), the direction of the gravitational acceleration from the measured values of the two accelerometers (21).

14. The method (32) according to any one of claims 11 to 13,
**characterized by**
transferring, in step b), the accelerations into a reference system which does not rotate together with the roller drum (5).

## Revendications

1. Rouleau (1) pour le compactage du sol, en particulier un rouleau tandem ou un rouleau mono-cylindre, avec :
- un châssis (3) de machine ;
- une unité d'entraînement (4) ;
- au moins un cylindre (5) de rouleau monté sur le châssis (3) de machine pour une rotation autour d'un axe de rotation (20) ;
- un dispositif excitateur (30) disposé au moins en partie dans le cylindre (5) du rouleau ; et
- un dispositif détecteur (19) disposé sur le cylindre (5) du rouleau dans la zone de l'axe de rotation (20) et qui tourne de concert avec le cylindre (5) du rouleau pendant le fonctionnement du rouleau (1) pour le compactage du sol afin de mesurer le compactage d'un sol (8) obtenu par un passage du rouleau (5) pour le compactage du sol,
***caractérisé en ce que***
ledit dispositif détecteur (19) comprend deux accéléromètres (21) qui comprennent chacun un axe de mesure respectif (28, 29) et ***en ce que*** les axes de mesure (28, 29) sont décalés l'un par rapport à l'autre selon un certain angle.

2. Rouleau (1) pour le compactage du sol selon la revendication 1,
***caractérisé en ce que***
les axes de mesure (28, 29) sont orientés perpendiculairement à l'axe de rotation (20) du cylindre (5) du rouleau et/ou sont décalés l'un par rapport à l'autre d'un angle de 90°.

3. Rouleau (1) pour le compactage du sol selon la revendication 2,
***caractérisé en ce que***
les axes de mesure (28, 29) des accéléromètres (21) coupent l'axe de rotation (20) du cylindre (5) du rouleau.

4. Rouleau (1) pour le compactage du sol selon l'une quelconque des revendications précédentes,
***caractérisé en ce que***
le dispositif détecteur (19) est disposé sur une rondelle en coupelle (10) du cylindre (5) du rouleau, en particulier la rondelle en coupelle (10) opposée à une rondelle en coupelle (10) portant le moteur (15) de l'excitateur, et/ou la rondelle en coupelle (10) sur le côté où un moteur de traction (11) pour entraîner en rotation le cylindre (5) du rouleau autour de son axe de rotation (20) est disposé.

5. Rouleau (1) pour le compactage du sol selon l'une quelconque des revendications précédentes,
***caractérisé en ce que***
deux dispositifs détecteurs (19, 36, 37) sont prévus sur le cylindre (5) du rouleau qui sont écartés l'un de l'autre de manière transversale à une direction de travail (a) du rouleau (1) pour le compactage du sol, et sont en particulier disposés chacun sur l'une respective des rondelles en coupelle (10) du cylindre (5) du rouleau.

6. Rouleau (1) pour le compactage du sol selon l'une quelconque des revendications précédentes,
***caractérisé en ce que***
le dispositif détecteur (19) comprend une alimentation en énergie électrique qui est indépendante d'un réseau de bord du rouleau (1) pour le compactage du sol.

7. Rouleau (1) pour le compactage du sol selon la revendication 6,
***caractérisé en ce que***
le dispositif détecteur (19) est alimenté en énergie électrique via un générateur (22) entraîné par un arbre (16) d'excitateur du dispositif excitateur (30).

8. Rouleau (1) pour le compactage du sol selon la revendication 7,
***caractérisé en ce que***
un arbre passant (27) relie l'arbre (16) d'excitateur du dispositif excitateur (30) et le générateur (22), et le générateur (22) est entraîné par l'arbre (16) d'excitateur via ledit arbre passant (27).

9. Rouleau (1) pour le compactage du sol selon l'une quelconque des revendications 7 à 8,
***caractérisé en ce que***
le générateur (22) est configuré pour détecter la position de rotation d'une masse de balourd (18) sur l'arbre (16) d'excitateur.

10. Rouleau (1) pour le compactage du sol selon l'une quelconque des revendications précédentes,
***caractérisé en ce que***
le dispositif détecteur (19) comprend un dispositif de transmission (23) qui transmet sans fil les résultats de mesures du dispositif détecteur (19) à un dispositif de réception (24), en particulier à un dispositif de réception mobile.

11. Procédé (32) de détermination du tassement d'un sol lors du compactage du sol avec un rouleau (1) pour le compactage du sol, en particulier un rouleau tandem ou un rouleau mono-cylindre, de manière préférée selon l'une quelconque des revendications précédentes, comprenant les étapes de :
a) mesure (33) de l'accélération directement sur et dans la zone de l'axe de rotation (20) d'un cylindre (5) de rouleau qui tourne lors de son utilisation, en utilisant deux accéléromètres (21) ayant des axes de mesure (28, 29) qui sont décalés l'un par rapport à l'autre selon un certain angle,
b) détermination (34) du tassement du sol à partir des valeurs mesurées, et
c) transmission sans fil (35) des valeurs mesurées et/ou des valeurs de tassement du sol à un dispositif de réception (24).

12. Procédé (32) selon la revendication 11,
***caractérisé par***
la mesure (33), à l'étape a), qui utilise deux accéléromètres (21) ayant des axes de mesure (28, 29) qui sont décalés l'un par rapport à l'autre de 90°.

13. Procédé (32) selon l'une quelconque des revendications 11 à 12,
***caractérisé par***
la détermination (34) à l'étape b), de la direction de l'accélération gravitationnelle à partir des valeurs mesurées des deux accéléromètres (21).

14. Procédé (32) selon l'une quelconque des revendications 11 à 13,
***caractérisé par***
le transfert, à l'étape b), des accélérations dans un système de référence qui ne tourne pas en même temps que le cylindre (5) du rouleau.
